# EUROPÄISCHE PATENTSCHRIFT

(11) **EP 3 028 965 B1**
(45) Veröffentlichungstag und Bekanntmachung des Hinweises auf die Patenterteilung: **13.02.2019**
(21) Anmeldenummer: 14195638.3
(22) Anmeldetag: 01.12.2014
(51) Int. Cl.: B65G 54/02

(54) **Fördervorrichtung zum Fördern von Produkten**
Device for transporting products
Convoyeur destiné au transport de produits

(43) Veröffentlichungstag der Anmeldung: 08.06.2016
(73) Patentinhaber: UHLMANN PAC-SYSTEME GmbH & Co. KG, 88471 Laupheim (DE)
(72) Erfinder: Aumann, Thomas, 88451 Dettingen (DE); Haaga, Jürgen, 89616 Rottenacker (DE); Rodi, Wolfgang, 88471 Laupheim / Baustetten (DE); Zieher, Daniel, 88444 Ummendorf (DE)
(74) Vertreter: Wächter, Jochen

(56) Entgegenhaltungen:
- EP-A1- 2 460 446
- WO-A1-2009/039865
- WO-A1-2010/083979
- DE-A1- 4 301 434
- US-A1- 2004 256 918

## Beschreibung

Die vorliegende Erfindung betrifft eine Fördervorrichtung zum Fördern von Produkten nach dem Oberbegriff des Anspruchs 1.

In der Linearmotortechnik werden unter anderem Transportsysteme eingesetzt, die Förderelemente oder Schlitten aufweisen, die individuell zueinander bewegbar sind. Die Schlitten, die auch als Mover bezeichnet werden, sind auf einer Führungsschiene geführt. Die Führungsschiene ist in der Regel als ein ortsfestes, umlaufend angeordnetes System ausgebildet. Die Schlitten werden von einem Linearantrieb in einer Transportrichtung angetrieben. Der Linearantrieb umfasst mehrere Spulen, die bei einem Anlegen von elektrischer Energie ein wechselndes Magnetfeld aufbauen. An den Schlitten bzw. Movern sind Magnete, insbesondere Permanentmagnete, befestigt, um den Antrieb des Movers zu gewährleisten. Dadurch, dass jede Spule individuell bestromt werden kann, ist ein individuelles Antreiben eines jeden Schlittens möglich.

Eine solche Transportvorrichtung ist beispielsweise aus dem Dokument WO 2013/156177 A1 bekannt, welches eine Fördervorrichtung nach dem Oberbegriff des Anspruchs 1 offenbart. Der Schlitten weist im Wesentlichen eine umgekehrte U-Form mit zwei Schenkeln auf, wobei die zwei Schenkel starr miteinander verbunden sind. An einem unteren Ende der Schenkel sind Permanentmagnete angeordnet, die in Wirkverbindung mit Spulen der Linearantriebseinheit stehen. Da die einzelnen Schlitten die Führungsschiene zwischen sich aufnehmen, ist ein Entnehmen eines Schlittens, beispielsweise zum Säubern oder zum Erneuern von Verschleißteilen, aus einem geschlossenen Schienensystem aufwändig und zeitintensiv.

WO 2010/083979 A1 offenbart eine Transportvorrichtung mit einem Schlitten und einer Führungsschiene. Der Schlitten trägt mehrere Spulen und wird mit Hilfe einer Linearmotorantriebseinheit angetrieben. Zwei Teilabschnitte des Schlittens sind relativ zueinander beweglich. Über eine Koppeleinrichtung wird eine definierte Vorspannkraft zwischen den Teilabschnitten und der Führungsschiene vorgegeben. Die Koppeleinrichtung bewirkt eine Vorspannkraft der Lagerwalzen des Schlittens auf die Führungsschiene.

In DE 10 2012 200 951 A1 umfasst die Transportvorrichtung ebenfalls mehrere Schlitten, die auf einer ortsfesten, umlaufend angeordneten Führungsschiene geführt werden. Die Schlitten weisen des Weiteren Teilabschnitte auf, die über eine Gelenkverbindung miteinander verbunden sind. Über die Gelenkverbindung kann der Abstand der Permanentmagnete zu den Motorspulen in den Kurvenbereichen nahezu konstant gehalten werden.

Ein Transportsystem mit einer Wechsel- bzw. einer Schleuseneinrichtung zum Wechseln der Schlitten ist beispielsweise in DE 10 2011 017 525 A1 beschrieben. Das Transportsystem weist eine geschlossene Transportstrecke auf, auf der die Schlitten geführt werden. Um beispielsweise Verschleißteile auszutauschen oder die Schlitten reinigen zu können, weist das Transportsystem eine Schleusenvorrichtung auf, mittels der die Transportstrecke geöffnet bzw. geschlossen werden kann, sodass in einem geöffneten Zustand die Schlitten entnommen werden können.

Der vorliegenden Erfindung liegt die Aufgabe zugrunde, eine Fördervorrichtung zum Fördern von Produkten zu schaffen, bei der eine Entnahme oder ein Einsetzen eines Schlittens an einer beliebigen Stelle der Führungsschiene erfolgen kann und besonders einfach und schnell möglich ist.

Diese Aufgabe wird durch die Merkmale des Anspruchs 1 gelöst.

Erfindungsgemäß umfasst die Fördervorrichtung zum Fördern von Produkten einen oder eine Mehrzahl von individuell zueinander bewegbaren Schlitten zur Aufnahme der Produkte und eine vorzugsweise umlaufend angeordnete Führungsschiene, auf der die Schlitten geführt sind. Des Weiteren umfasst die Fördervorrichtung eine Linearmotorantriebseinheit zum Antreiben der Schlitten, wobei die Schlitten jeweils mindestens einen Permanentmagneten aufweisen, der mit Spulen der Linearmotorantriebseinheit in Wirkverbindung steht. Jeder Schlitten weist einen im Wesentlichen hufeisenförmigen oder U-förmigen Grundträger mit zwei Schenkeln auf, die die Führungsschiene an zwei gegenüberliegenden Seiten umgeben. Der Grundträger ist in mindestens zwei miteinander verbundene Teilabschnitte unterteilt, von denen jeder einen Schenkel umfasst. Die mindestens zwei Teilabschnitte sind relativ zueinander bewegbar. Die Teilabschnitte sind relativ zueinander um eine parallel zu einer Längserstreckungsrichtung der Führungsschiene verlaufende Schwenkachse schwenkbar verbunden. Die Schwenkachse ist als eine formschlüssige Gelenkverbindung ausgebildet. Die Teilabschnitte sind zwischen einer geschlossenen Arbeitsposition, in der der Grundträger die Führungsschiene umschließt, und einer geöffneten Wartungsposition, in der der Grundträger von der Führungsschiene lösbar ist, bewegbar.

Mit dieser Ausgestaltung ist ein schnelles Abnehmen der Schlitten von der Führungsschiene und Einsetzen der Schlitten auf die Führungsschiene an jeder Stelle der Führungsschiene möglich.

Die zwei Teilabschnitte sind quer zu einer Längserstreckungsrichtung der Führungsschiene relativ zueinander bewegbar. Auf diese Weise gelingt es besonders einfach, die Öffnungsweite zwischen den Schenkeln zu verstellen und ein schnelles Abnehmen der Schlitten von der Führungsschiene zu ermöglichen.

Die zwei Schenkel weisen eine im Wesentlichen spiegelsymmetrische Form bezüglich einer Längsmittelebene jedes Schlittens auf. Mit dieser Ausgestaltung lässt sich eine gleichmäßige Gewichtsverteilung des Schlittens erzielen, was wiederum für ruhige Laufeigenschaften des Schlittens sorgt.

Die Schwenkachse ist vorzugsweise in der Längsmittelebene des Schlittens angeordnet. Dadurch wird eine optimale Geometrie zur Entnahme des Schlittens gewährleistet. Die formschlüssige Gelenkverbindung kann z.B. durch einen Passstift realisiert sein, der in Durchgangsbohrungen der Teilabschnitte eingreift.

In einer besonders bevorzugten Ausgestaltung der erfindungsgemäßen Fördervorrichtung weisen die zwei Teilabschnitte jeweils im Bereich der Schwenkachse Ausnehmungen und Vorsprünge auf, wobei die Ausnehmungen und Vorsprünge derart angeordnet sind, dass jeweils die Vorsprünge des einen Teilabschnitts in die Ausnehmungen des anderen Teilabschnitts eingreifen und die Durchgangsbohrungen in den Vorsprüngen und Ausnehmungen miteinander fluchten. Dies gewährleistet eine stabile Schwenkachse über die gesamte Erstreckung des Grundträgers.

Ebenfalls bevorzugt ist es, wenn die Spulen der Linearmotorantriebseinheit Statoren mit Statorzähnen umfassen und eine Anziehungskraft zwischen den Permanentmagneten und den Statorzähnen einer ungewünschten Vergrößerung der Öffnungsweite zwischen den Schenkeln entgegenwirkt. Auf diese Weise kann in der Regel ohne zusätzliche Maßnahmen eine hohe Steifigkeit des Schlittens erreicht und gleichzeitig die gewünschte Laufruhe erzielt werden. Zusätzlich werden die Laufrollen vorgespannt und sind auch nach einer Reduzierung des Laufrollen-Durchmessers durch Verschleiß jederzeit spielfrei. Dies ist für eine zuverlässige Regelung der Bewegung der Schlitten vorteilhaft. Ein Großteil der Vorspannkraft entsteht durch die Wechselwirkung der Permanentmagnete mit den eisenhaltigen Statorzähnen. Diese Kraft kann durch die Bestromung der Spulen erhöht werden. Somit kann auch die Vorspannung der Laufrollen durch die Bestromung der Spulen verändert werden.

Damit für bestimmte Lasttransporte eine höhere Steifigkeit des erfindungsgemäßen zweiteiligen Schlittens erreicht wird, kann der Schlitten ein lösbares Zusatzelement aufweisen, das form- oder reibschlüssig mit den zwei Teilabschnitten des Grundträgers verbunden ist und einer ungewünschten Vergrößerung der Öffnungsweite zwischen den Schenkeln entgegenwirkt.

Dabei kann das Zusatzelement zwei Schenkel aufweisen, die die zwei Teilabschnitte des Grundträgers formschlüssig zwischen sich aufnehmen. In einer besonders bevorzugten Ausgestaltung kann dabei das Zusatzelement eine im Wesentlichen umgekehrte U-Form aufweisen.

Alternativ kann das Zusatzelement ein Passstift sein, der sich im Wesentlichen quer zur Längserstreckungsrichtung der Führungsschiene durch beide Teilabschnitte des Grundträgers erstreckt. So wird auf einfache Weise jedes unerwünschte geringfügige Aufschwenken der beiden Teilabschnitte unterbunden.

Schließlich ist es bevorzugt, wenn die Teilabschnitte in einem Bereich nahe der Schwenkachse Aussparungen zur Aufnahme von Stiften eines Öffnungswerkzeugs aufweisen. Auf diese Weise kann der Grundträger mit einem einfachen mechanischen Hilfsmittel in die geöffnete Wartungsposition verschwenkt werden.

Weitere Eigenschaften und Vorteile der vorliegenden Erfindung ergeben sich aus der nachfolgenden Beschreibung unter Bezugnahme auf die Zeichnungen.
- Fig. 1: ist eine schematische Seitenansicht eines Ausführungsbeispiels einer erfindungsgemäßen Fördervorrichtung mit einer umlaufenden Führungsschiene und einem daran gelagerten und entlang der Führungsschiene bewegbaren Schlitten;
- Fig. 2: ist eine vergrößerte Perspektivansicht eines Kurvenabschnitts der Fördervorrichtung aus Fig. 1;
- Fig. 3: ist eine schematische Perspektivansicht eines geradlinigen Abschnitts der Fördervorrichtung aus Fig. 1;
- Fig. 4: ist eine schematische Perspektivansicht des an der Führungsschiene gelagerten Schlittens aus Fig. 1;
- Fig. 5: ist eine Perspektivansicht des Schlittens aus Fig. 4 mit einem durchsichtig dargestellten Grundträger;
- Fig. 6: ist eine Perspektivansicht des Schlittens aus Fig. 4 mit einem teilweise abgebrochen dargestellten Grundträger;
- Fig. 7: ist eine Perspektivansicht eines Schlittens, der sich in einem aufgeklappten Zustand befindet;
- Fig. 8: ist eine Frontansicht des aufgeklappten Schlittens aus Fig. 7;
- Fig. 9: ist eine Frontansicht des Schlittens aus Fig. 8 im eingeklappten Zustand mit einer Ausführungsform eines Zusatzelements;
- Fig. 10: ist eine Frontansicht des Schlittens aus Fig. 8 im eingeklappten Zustand mit einer weiteren Ausführungsform des Zusatzelements;
- Fig. 11: ist eine schematische Perspektivansicht eines Schlittens mit einer weiteren Ausführungsform des Zusatzelements;
- Fig. 12: ist eine Perspektivansicht eines Öffnungswerkzeugs zum Aufschwenken der eingeklappten Teilabschnitte des Schlittens;
- Fig. 13: ist eine Frontansicht des auf den Schlitten aufgesetzten Öffnungswerkzeugs aus Fig. 12;
- Fig. 14: ist eine Frontansicht wie in Fig. 13 mit zusammengedrücktem Öffnungswerkzeug und somit aufgeschwenktem Grundträger des Schlittens;
- Fig. 15: ist eine schematische Perspektivansicht einer anderen Gestaltung des Schlittens im geschlossenen Zustand; und
- Fig. 16: ist eine schematische Perspektivansicht der Gestaltung des Schlittens aus Fig. 15 im geöffneten Zustand.

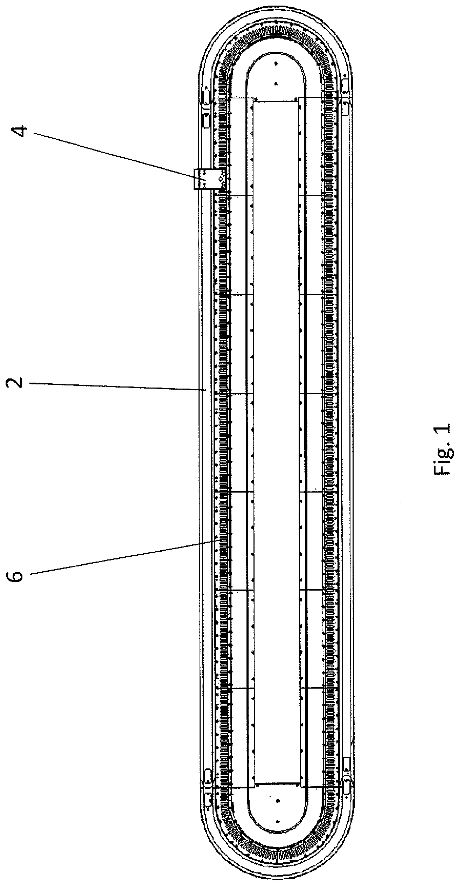

Fig. 1 zeigt eine Möglichkeit des grundsätzlichen Aufbaus einer erfindungsgemäßen Fördervorrichtung zur Förderung von Produkten. Die Fördervorrichtung umfasst eine vorzugsweise ortsfeste, umlaufend angeordnete Führungsschiene 2 zur Führung mindestens eines bewegbaren Schlittens 4, der zum Fördern eines oder mehrerer Produkte dient und entlang der Führungsschiene 2 bewegt wird. Auch wenn im dargestellten Beispielsfall lediglich ein Schlitten 4 vorhanden ist, werden in der Regel mehrere Schlitten 4 gleichzeitig auf derselben Führungsschiene 2 verfahren. Das Material der Führungsschiene 2 und des Schlittens 4 ist vorzugsweise Aluminium.

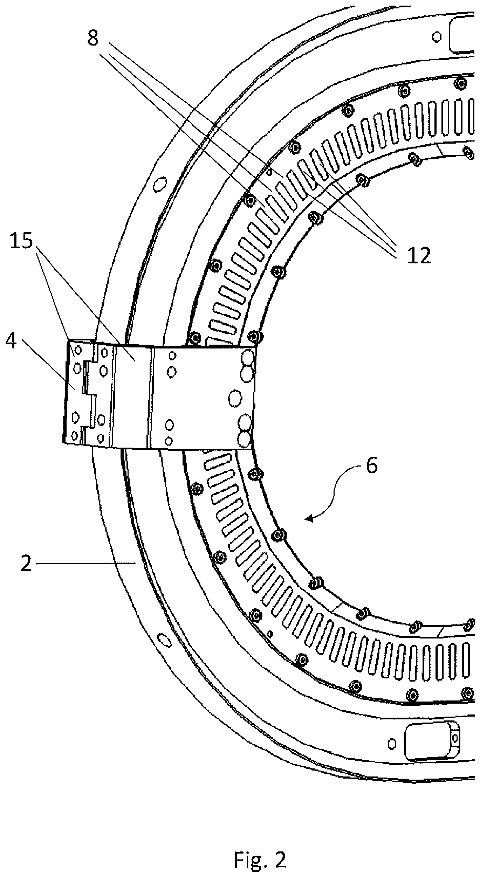

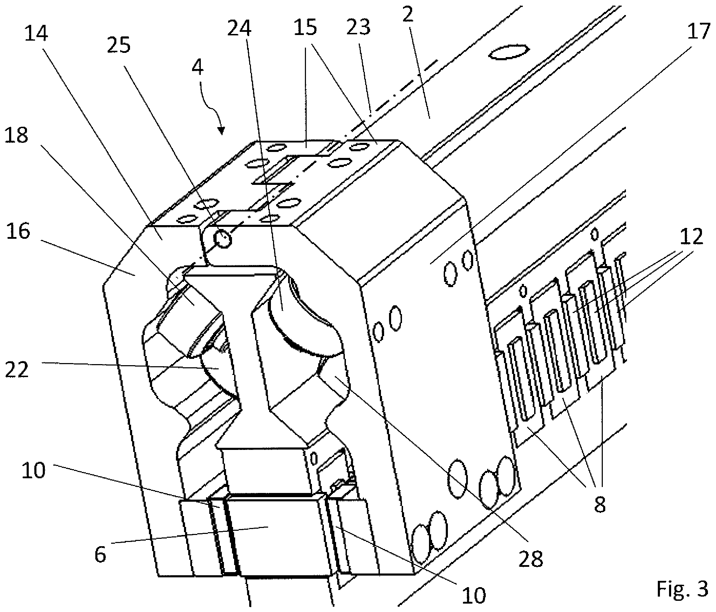

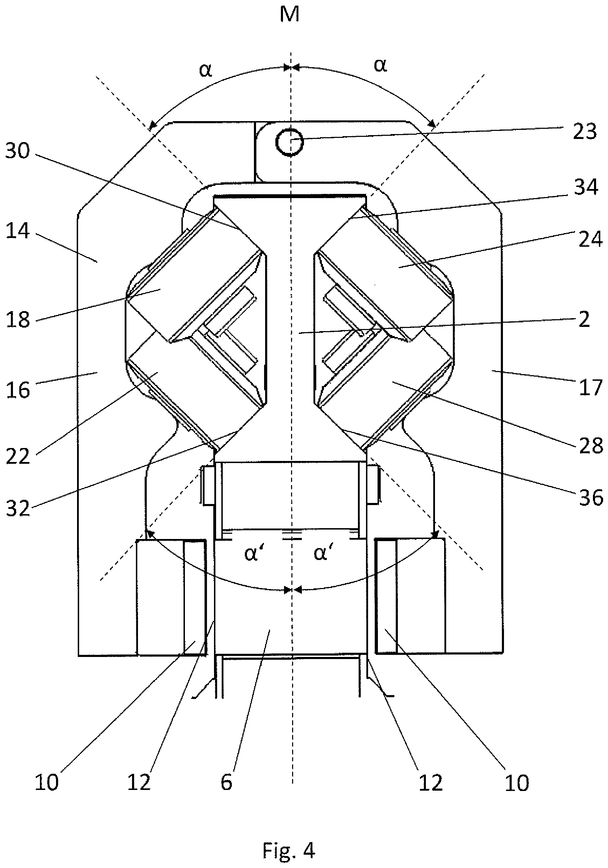

Zum Antrieb des mindestens einen Schlittens 4 dient eine Linearmotorantriebseinheit 6, welche üblicherweise als Motorspulenpaket ausgebildet ist. Die Linearmotorantriebseinheit 6 umfasst viele aneinander gereihte Spulen 8 (siehe Fig. 2), vorzugsweise aus Kupfer, die einzeln bestromt werden können. Der Schlitten 4 weist wiederum, wie z.B. aus Fig. 3 und 4 ersichtlich ist, mindestens einen, bevorzugt zwei Permanentmagnete 10 auf, die mit der Linearmotorantriebseinheit 6 in Wirkverbindung stehen. Die Lagerung und Führung des Schlittens 4 entlang der Führungsschiene 2 erfolgt über eine Mehrzahl von Laufrollen, auf die weiter unten näher eingegangen wird. Diese Laufrollen sind vorzugsweise aus Kunststoff gebildet.

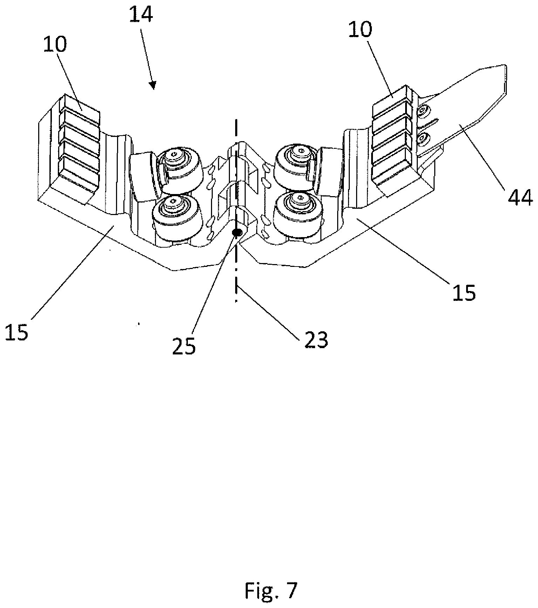

Bei Bestromung einer Spule 8 entstehen lokale Magnetfelder und somit ein Kraftfluss zwischen der Spule 8 und dem Permanentmagneten 10. Durch intelligentes Ansteuern und Bestromen der einzelnen Spulen 8 kann ein "wanderndes" Magnetfeld erzeugt werden, welches jeden einzelnen Schlitten 4 unabhängig von den anderen Schlitten 4 bewegen kann. Aufgrund der beidseitig neben der Linearmotorantriebseinheit 6 angeordneten Permanentmagnete 10 wird die direkte Kraftwirkung zwischen jeder Spule 8 und den Permanentmagneten 10 theoretisch neutralisiert und es verbleibt lediglich eine Antriebskraft, welche auf den Schlitten 4 wirkt. Am Schlitten 4 kann auch, wie in Fig. 7 bis 9 dargestellt, eine Geberfahne 44 angeordnet sein, die zur Wegerfassung dient und die Position des Schlittens 4 an die Linearmotorantriebseinheit 6 übermittelt.

Die größte Anziehungskraft besteht zwischen den Permanentmagneten 10 und den Statorzähnen 12 zwischen den Spulen 8. Die eisenhaltigen Statorzähne 12 haben die Funktion, die Magnetfelddichte zu erhöhen. Theoretisch könnte die Linearmotorantriebseinheit 6 auch eisenlos gebaut werden, allerdings verringert sich dadurch die erreichbare Antriebskraft.

Wie aus Fig. 1 bis 4 deutlich wird, liegt im dargestellten Beispielsfall die Linearmotorantriebseinheit 6 innerhalb der von der Führungsschiene 2 definierten ovalen Form und weist eine ebensolche ovale Form auf.

Jeder Schlitten 4 kann demnach sowohl eine geradlinige Bewegung als auch eine Kurvenbewegung ausführen. Durch eine Kombination von Gerade und Kurven können neben der in Fig. 1 dargestellten ovalen Bahnform der Führungsschiene 2 beliebige Bahnformen realisiert werden. Es sind hier viele andere Ausgestaltungen möglich.

Allerdings ist die dargestellte Bahnform insoweit vorteilhaft, als in den Kurven eine abgewandelte Klothoidenbewegung erfolgt. Die Kurvenbahn ist krümmungsstetig und auch die erste und zweite Ableitung der Krümmung ist stetig. Auf diese Weise wird die sprunghafte Änderung der Winkelgeschwindigkeit und der Fliehkraft in Kurveneingang und -ausgang vermieden. Dies führt zu einer Erhöhung der Lebensdauer der Laufrollen, und die Schwingungen auf das Gesamtsystem werden reduziert.

Aufgrund des im Wesentlichen symmetrischen Aufbaus von Schlitten 4 und Führungsschiene 2 bezüglich einer Längsmittelebene M (Fig. 4) der Fördervorrichtung sollte, wie oben bereits erwähnt, die direkte Kraftwirkung jeder Spule 8 auf die Permanentmagneten 10 neutralisiert werden. Verringert sich allerdings der Spalt zwischen Spule 8 und Permanentmagneten 10 auf einer Seite, würde eine direkte Kraftkomponente zwischen der Spule 8 und dem Permanentmagneten 10 entstehen. Aufgrund von Fertigungstoleranzen und dynamischen Verformungen muss davon ausgegangen werden, dass die Breite des Spaltes variiert und somit Querkräfte auf den Schlitten 4 wirken. Deshalb muss der Schlitten 4 robust gelagert werden, um den Spalt zwischen Spule 8 und Permanentmagneten 10 auf beiden Seiten möglichst konstant halten zu können.

Diese robuste Lagerung wird im Folgenden unter Bezugnahme auf Fig. 3 bis 6 näher beschrieben. Der Schlitten 4 weist einen im Wesentlichen hufeisenförmigen oder U-förmigen (bzw. umgekehrt U-förmigen) Grundträger 14 mit zwei Teilabschnitten 15 auf. Denkbar ist auch, dass der Grundträger 14 mehr als zwei Teilabschnitte 15 aufweist. Jeder der beiden Teilabschnitte 15 umfasst einen Schenkel 16, 17 der U-Form. Von den Schenkeln 16, 17 ragen Laufrollen 18, 20, 22, 24, 26, 28 nach innen ab.

Konkreter umfassen in der dargestellten Ausführungsform die beiden Teilabschnitte 15 einen ersten Abschnitt 27, einen zweiten Abschnitt 29 und einen den ersten und den zweiten Abschnitt 27, 29 verbindenden dritten Abschnitt 31. Die ersten Abschnitte 27 erstrecken sich senkrecht zur Längsmittelebene M. Die zweiten Abschnitte sind jeweils parallel zu der Längsmittelebene M angeordnet und weisen in einem unteren Bereich des zweiten Abschnitts 29 an einer Innenseite 33 des zweiten Abschnitts 29, die der Führungsschiene 2 zugewandt ist, die Permanentmagnete 10 auf. Die Permanentmagnete 10 umgeben die Linearmotorantriebseinheit 6 somit planparallel von beiden Seiten. Vorzugsweise sind mehrere Permanentmagnete 10 auf beiden Seiten des Schlittens 4 vorgesehen. Die verbindenden dritten Abschnitte 31 sind jeweils zwischen den ersten und den zweiten Abschnitten 27, 29 und schräg zu diesen angeordnet.

Die sechs Laufrollen 18, 20, 22, 24, 26, 28 liegen auf insgesamt vier Laufflächen 30, 32, 34, 36 der Führungsschiene 2 an und rollen auf diesen bei Bewegung des Schlittens 4 ab. Der von der Längsmittelebene M betrachtet linke Teilabschnitt 15 in Fig. 4 weist demnach drei Laufrollen 18, 20, 22 auf, wobei die ersten beiden Laufrollen 18, 20 auf der ersten Lauffläche 30 und die dritte Laufrolle 22 auf der zweiten Lauffläche 32 anliegen. Ebenso weist der von der Längsmittelebene M betrachtet rechte Teilabschnitt 15 drei Laufrollen 24, 26, 28 auf, von denen die beiden ersten Laufrollen 24, 26 auf einer ersten Lauffläche 34 und die dritte Laufrolle 28 auf einer zweiten Lauffläche 36 anliegen.

Jede Lauffläche 30, 32, 34, 36 jeder Seitenflanke ist dabei unter einem spitzen Winkel a, a' zur Längsmittelebene M angeordnet, so dass die zwei Laufflächen 30, 32 bzw. 34, 36 jeder Seitenflanke miteinander einen Winkel von 80° bis 100° einschließen. Vorzugsweise beträgt der spitze Winkel a, a' zwischen jeder Lauffläche 30, 32, 34, 36 und der Längsmittelebene M 40° bis 50°, besonders bevorzugt im Wesentlichen 45°. Dementsprechend ist es auch vorteilhaft, wenn die zwei Laufflächen 30, 32 bzw. 34, 36 jeder Seitenflanke miteinander einen Winkel von im Wesentlichen 90° einschließen.

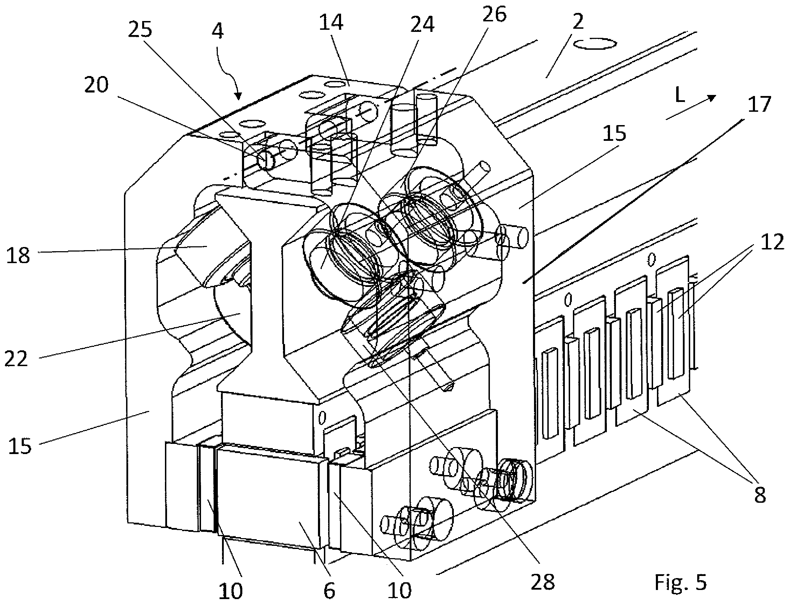

Die drei Laufrollen 18, 20, 22 bzw. 24, 26, 28 jedes Teilabschnitts 15 sind also schräg angeordnet. Genauer gesagt sind sie in einer verkippten Dreiecksanordnung angeordnet, wobei die beiden ersten Laufrollen 18, 20 bzw. 24, 26 parallele Drehachsen aufweisen, während die dritte Laufrolle 22 bzw. 28 eine unter einem Winkel von 80° bis 100°, besonders bevorzugt im Wesentlichen 90°, zu den Drehachsen der ersten beiden Laufrollen 18, 20 bzw. 24, 26 gekippte Drehachse aufweist. Wie insbesondere aus Fig. 5 ersichtlich ist, ist dabei die dritte Laufrolle 22 bzw. 28 jedes Teilabschnitts 15 bezüglich der veränderlichen Längserstreckungsrichtung (Pfeil L) der Führungsschiene 2 genau in der Mitte zwischen den beiden anderen Laufrollen 18, 20 bzw. 24, 26 angeordnet, so dass sich eine gleichschenklige, möglicherweise sogar gleichwinklige Dreiecksanordnung ergibt.

Wie am besten aus Fig. 4 hervorgeht, sind die beiden Laufflächen 30, 32 bzw. 34, 36 jeder Seitenflanke der Führungsschiene 2 voneinander beabstandet und einander zugewandt. Die Führungsschiene 2 besitzt somit ein Doppel-T-Profil mit abgeschrägten Laufflächen 30, 32, 34, 36 an den Außenwänden der T-Balken.

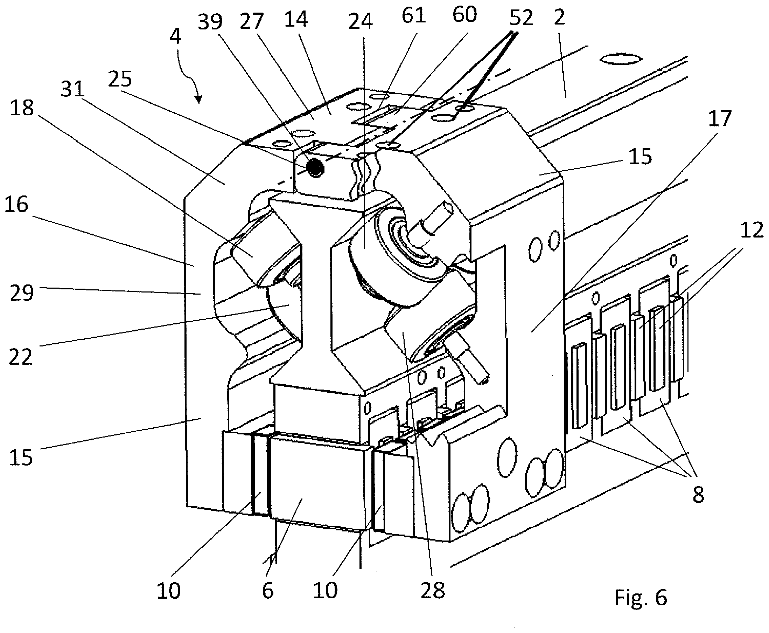

Wie schließlich am besten aus Fig. 3 und 6 ersichtlich ist, sind die Laufrollen 18, 20, 22, 24, 26, 28 der Teilabschnitte 15 drehbar am Grundträger 14 des Schlittens 4 gelagert.

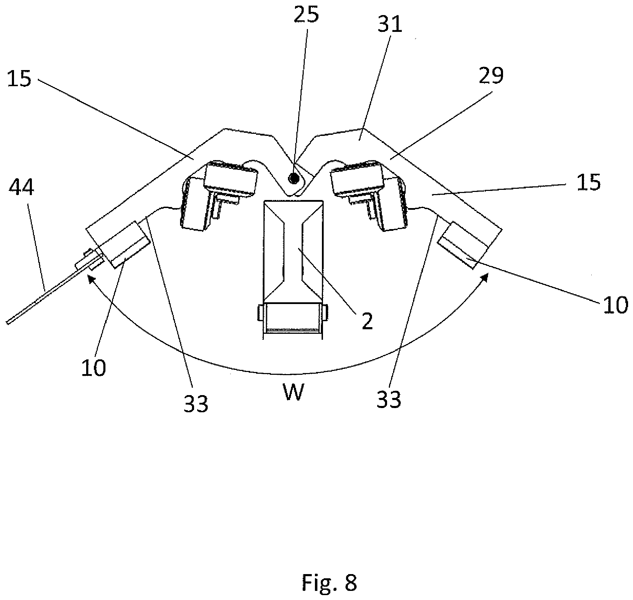

Bezug nehmend auf Fig. 2 bis 8 erkennt man, dass die zwei Teilabschnitte 15 relativ zueinander um eine parallel zur Längserstreckungsrichtung L der Führungsschiene 2 verlaufende Schwenkachse 23 schwenkbar verbunden sind. Hierdurch ist die Öffnungsweite W (siehe Fig. 8) zwischen den Schenkeln 16, 17 verstellbar. Dieser Mechanismus wird verwendet, um die Teilabschnitte 15 zwischen einer geschlossenen oder eingeklappten Arbeitsposition, in der der Grundträger 14 die Führungsschiene 2 umschließt (siehe Fig. 2 bis 6), und einer geöffneten oder aufgeklappten Wartungsposition, in der der Grundträger 14 von der Führungsschiene 2 lösbar ist (siehe Fig. 7 und 8), zu verschwenken. In Fig. 8 ist zusätzlich zu dem Grundträger 14 die Führungsschiene 2 dargestellt, auf der der Schlitten 4 geführt wird. In der in Fig. 8 dargestellten Wartungsposition sind die Teilabschnitte 15 voneinander weggeschwenkt, so dass die Laufrollen 18, 20, 22, 24, 26, 28 nicht mehr an der Führungsschiene 2 anliegen. Der Grundträger 14 kann folglich einfach von der Führungsschiene 2 abgenommen werden.

Die Schwenkachse 23 ist vorzugsweise in der Längsmittelebene M jedes Schlittens 4 angeordnet. Konkret ist hierfür vorzugsweise eine formschlüssige Gelenkverbindung vorgesehen. In der in den Figuren dargestellten Ausführungsform ist die formschlüssige Gelenkverbindung durch einen Passstift 25 realisiert, der in Durchgangsbohrungen 39 (siehe Fig. 6) der Teilabschnitte 15 eingreift.

Im dargestellten Ausführungsbeispiel weisen die zwei Teilabschnitte 15 jeweils im Bereich der Schwenkachse 23 abwechselnd Ausnehmungen 60 und Vorsprünge 61 auf, wobei die Ausnehmungen 60 und Vorsprünge 61 derart angeordnet sind, dass jeweils die Vorsprünge 61 des einen Teilabschnitts 15 in die Ausnehmungen 60 des anderen Teilabschnitts 15 eingreifen und die Durchgangsbohrungen 39 in den Vorsprüngen 61 und Ausnehmungen 60 miteinander fluchten. Dem Fachmann sind aber viele andere Möglichkeiten der Schwenkverbindung geläufig. Die Öffnungsweite W hängt von der Geometrie der Gelenkverbindung und der einzelnen Bauteile ab.

Normalerweise reicht im Betrieb der Fördervorrichtung die Anziehungskraft zwischen den Permanentmagneten 10 und den Statorzähnen 12 aus, um einer ungewünschten Vergrößerung der Öffnungsweite W zwischen den Schenkeln 16, 17 entgegenzuwirken und somit eine ausreichende Steifigkeit des Grundträgers 14 aufrechtzuerhalten, die wiederum für eine Vorspannung der Laufrollen 18, 20, 22, 24, 26, 28 in Richtung Führungsschiene 2 sorgt.

Sollen jedoch Lasten mit einem höheren Gewicht von der Fördervorrichtung befördert werden, kann eine höhere Steifigkeit des Grundträgers 14 des Schlittens 4 erforderlich werden.

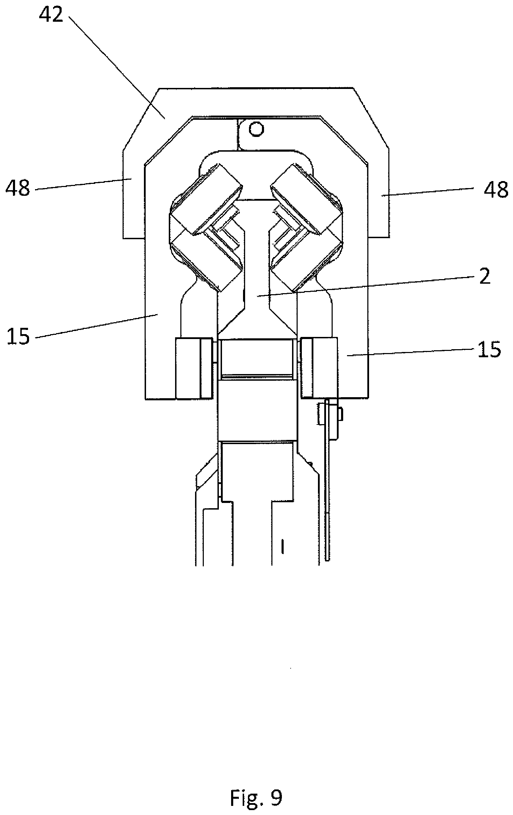

In diesem Fall kann, wie in Fig. 9 bis 11 dargestellt, jeder Schlitten 4 ein lösbares Zusatzelement 42 aufweisen, das form- oder reibschlüssig mit den zwei Teilabschnitten 15 des Grundträgers 14 verbunden ist und ebenfalls der ungewünschten Vergrößerung der Öffnungsweite W zwischen den Schenkeln 16, 17 entgegenwirkt.

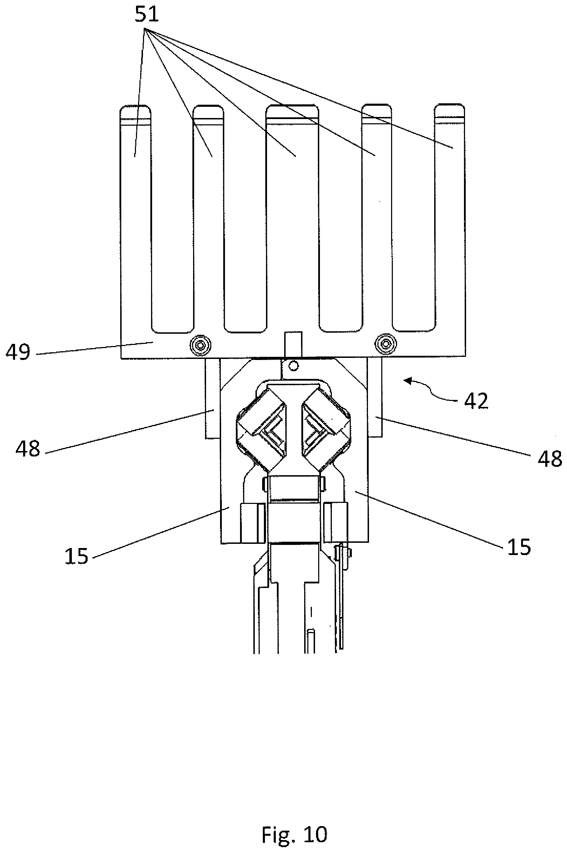

In den in Fig. 9 und 10 dargestellten Varianten des Zusatzelements 42 weist das Zusatzelement 42 zwei Schenkel 48 auf, die die zwei Teilabschnitte 15 des Grundträgers 14 formschlüssig zwischen sich aufnehmen.

In Fig. 9 weist das Zusatzelement 42 im Wesentlichen eine U-Form auf und ist umgekehrt von oben auf den Grundträger 14 aufgesetzt.

In Fig. 10 sind die zwei Schenkel 48 des Zusatzelements 42 unten an einem Trägeraufsatz 49 befestigt, der ohnehin für die Aufnahme der Produkte verwendet wird. Der Trägeraufsatz 49 kann beispielsweise vertikal abragende Finger oder Zinken 51 aufweisen.

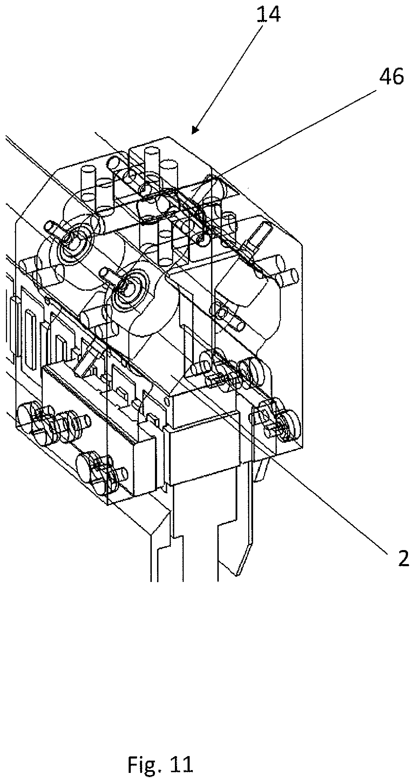

Alternativ kann das Zusatzelement 42 gemäß Fig. 11 ein Passstift 46 sein, der sich im Wesentlichen quer zur Längserstreckungsrichtung L der Führungsschiene 2 in Durchgangsbohrungen durch beide Teilabschnitte 15 des Grundträgers 14 erstreckt. Konkret erstreckt sich der Passstift 46 im dargestellten Ausführungsbeispiel von dem verbindenden Abschnitt 31 des einen Teilabschnitts 15 senkrecht zur Längsmittelebene M hin zu dem anderen verbindenden Abschnitt 31 des zweiten Teilabschnitts 15. Der Passstift 46 verhindert ein Schwenken der beiden Teilabschnitte 15. Sollen die Teilabschnitte 15 relativ zueinander geschwenkt werden, muss zunächst der Passstift 46 entfernt werden.

Durch die Einstellung der Rollenvorspannung über die verschiedenen Zusatzelemente 42, die in Fig. 9 bis Fig. 11 dargestellt sind, ergibt sich der Vorteil, dass für alle Anwendungen der gleiche Schlitten 4 verwendet werden kann. Die Steifigkeit bzw. die Rollenvorspannung des Schlittens 4 kann durch das jeweilige Zusatzelement 42 schnell und einfach an unterschiedliche Formate und Produkte, die mit dem Schlitten 4 befördert werden sollen, angepasst werden.

Um einen Schlitten auch im angeschalteten Zustand der Fördervorrichtung von der Führungsschiene 2 abnehmen zu können, muss die nicht unerhebliche Anziehungskraft zwischen den Permanentmagneten 10 und den Spulen 8 sowie Statorzähnen 12 der Linearmotorantriebseinheit 6 überwunden werden. Dies ist mit den Händen zwar möglich, aber mühsam, weil zudem nicht viel Platz zwischen den Permanentmagneten 10 und den Spulen 8 bzw. Statorzähnen 12 zum Eingreifen mit den Fingern vorhanden ist.

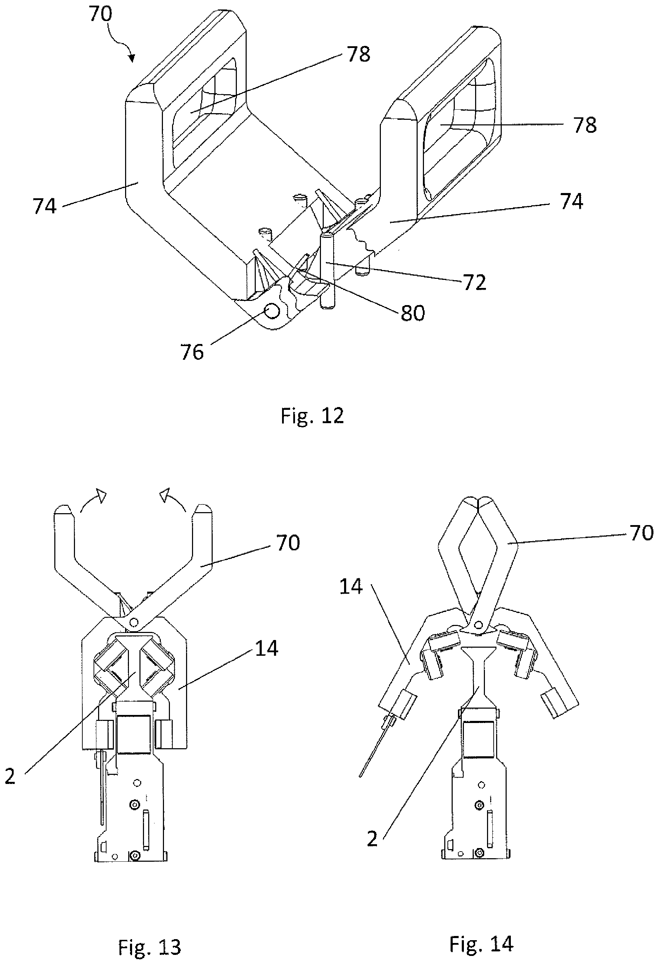

Zur Erleichterung dieses Vorgangs ist daher ein Öffnungswerkzeug 70 vorgesehen, das in Fig. 12 dargestellt ist. Das Öffnungswerkzeug 70 ist als Zange mit zwei Schenkeln 74 ausgebildet, die über ein Drehgelenk 76 miteinander verbunden sind. Jeder Schenkel 74 hat mindestens einen, vorzugsweise zwei parallel nach unten abragende Stifte 72. Jeder der beiden Schenkel 74 beinhaltet eine Griffmulde 78, die für den Bediener gut zugänglich ist. Die beiden Schenkel 74 können nun im Bereich ihrer Griffmulden 78 aufeinander zubewegt und somit zusammengedrückt werden, wodurch die Stifte 72 der beiden Schenkel 74 in einer nach außen und oben gerichteten Bewegung voneinander weg bewegt werden. Eine Torsionsfeder 80 übernimmt die Rückstellung des Öffnungswerkzeugs 70 in die Ausgangsposition.

Zur Entnahme eines Grundträgers 14 von der Führungsschiene 2 muss das Öffnungswerkzeug 70 gemäß Fig. 13 von oben auf den Grundträger 14 aufgesetzt werden. Dabei werden die Stifte 72 formschlüssig in Bohrungen 52 (siehe Fig. 6) im Grundträger 14, die nahe der Schwenkachse 23 angeordnet sind, aufgenommen. Die Achse des Drehgelenks 76 des Öffnungswerkzeugs 70 muss dabei identisch mit der Schwenkachse 23 des Schlittens 4 sein.

Durch das Zusammendrücken der Endabschnitte der Schenkel 74 erfolgt die Kraftübertragung über die Stifte 72 und die Bohrungen 52 auf den Grundträger 14 und die beiden Teilabschnitte 15 des Grundträgers 14 werden in die geöffnete Wartungsposition geschwenkt, die in Fig. 14 dargestellt ist. Durch die Länge der Schenkel 74 wird ein günstiges Hebelverhältnis erreicht, sodass die Kraft zum Auseinanderschwenken der Teilabschnitte 15 nur relativ klein ist. Der Schlitten 4 kann somit von der Führungsschiene 2 genommen werden.

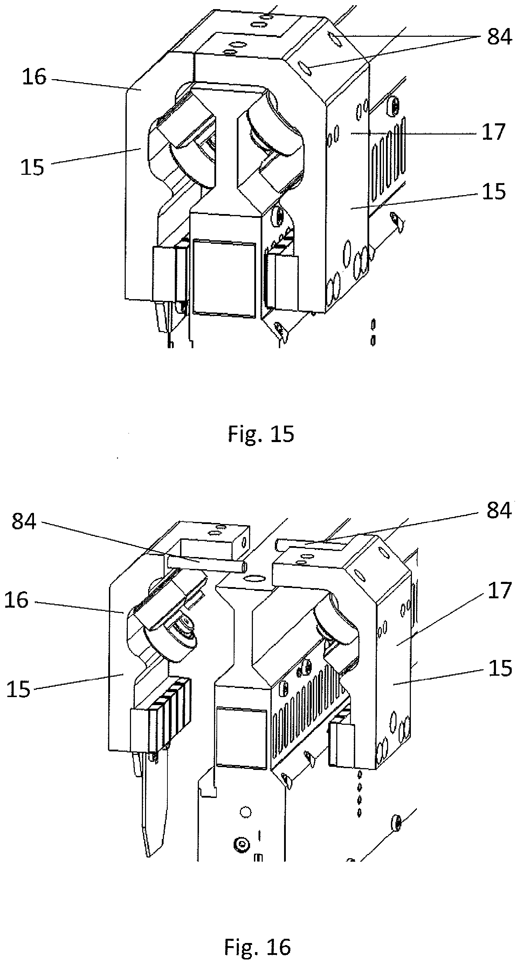

In Fig. 15 und 16 ist eine alternative Ausgestaltung des Schlittens 4 dargestellt. Hier sind die zwei Teilabschnitte 15 quer zur Laufschiene 2 linear zueinander verschieblich angeordnet. Die variable Öffnungsweite W zwischen den Schenkeln 16, 17 ist bei dieser Ausgestaltung demnach eine Strecke und kein Winkel wie zuvor angegeben.

Im dargestellten Beispielsfall der Fig. 15 und 16 wird die Verbindung der zwei Teilabschnitte 15 über Stifte 84 hergestellt, die jeweils in Öffnungen des anderen Teilabschnitts 15 eingesetzt sind. Es sind auch andere Verbindungen der beiden Teilabschnitte 15 denkbar, die eine lineare Verschiebung zueinander erlauben. Außer der Tatsache, dass die Schwenkbewegung der Teilabschnitte 15 durch eine Translationsbewegung ersetzt wird, gelten ansonsten die obigen Ausführungen zur Ausführungsform des Schlittens 4 mit den schwenkbaren Teilabschnitten 15.

## Patentansprüche

1. Fördervorrichtung zum Fördern von Produkten mit
mindestens einem individuell bewegbaren Schlitten (4) zur Aufnahme mindestens eines Produkts,
einer Führungsschiene (2), auf der der mindestens eine Schlitten (4) geführt ist, einer Linearmotorantriebseinheit (6) zum Antreiben des mindestens einen Schlittens (4),
wobei der mindestens eine Schlitten (4) einen im Wesentlichen hufeisenförmigen oder U-förmigen Grundträger (14) mit zwei Schenkeln (16, 17) aufweist, die die Führungsschiene (2) an zwei gegenüberliegenden Seiten umgeben, wobei von den Schenkeln (16, 17) Laufrollen (18, 20, 22, 24, 26, 28) nach innen abragen,
wobei der mindestens eine Schlitten (4) mindestens zwei Permanentmagnete (10) aufweist, die beidseitig neben der Linearmotorantriebseinheit (6) derart angeordnet sind und mit Spulen (8) der Linearmotorantriebseinheit (6) derart in Wirkverbindung stehen, dass eine Anziehungskraft zwischen den Permanentmagneten (10) und der Linearmotorantriebseinheit (6) eine Vorspannung der Laufrollen (18, 20, 22, 24, 26, 28) des mindestens einen Schlittens (4) an die Führungsschiene (2) bewirkt,
**dadurch gekennzeichnet, dass**
der Grundträger (14) in mindestens zwei miteinander verbundene Teilabschnitte (15) unterteilt ist, von denen jeder einen der Schenkel (16, 17) umfasst, und die Teilabschnitte (15) relativ zueinander um eine parallel zu einer Längserstreckungsrichtung (L) der Führungsschiene (2) verlaufende Schwenkachse (23) schwenkbar verbunden sind, wobei die Schwenkachse (23) als eine formschlüssige Gelenkverbindung ausgebildet ist,
wobei die mindestens zwei Teilabschnitte (15) relativ zueinander zwischen einer geschlossenen Arbeitsposition, in der der Grundträger (14) die Führungsschiene (2) umschließt, und einer geöffneten Wartungsposition, in der der Grundträger (14) von der Führungsschiene (2) lösbar ist, schwenkbar sind.

2. Fördervorrichtung nach Anspruch 1, **dadurch gekennzeichnet, dass** die Schwenkachse (23) in der Längsmittelebene (M) des mindestens einen Schlittens (4) angeordnet ist.

3. Fördervorrichtung nach Anspruch 1 oder 2, **dadurch gekennzeichnet, dass** die formschlüssige Gelenkverbindung durch einen Passstift (25) realisiert ist, der in Durchgangsbohrungen (39) der Teilabschnitte (15) eingreift.

4. Fördervorrichtung nach Anspruch 3, **dadurch gekennzeichnet, dass** die Teilabschnitte (15) jeweils im Bereich der Schwenkachse (23) Ausnehmungen (60) und Vorsprünge (61) aufweisen, wobei die Ausnehmungen (60) und Vorsprünge (61) derart angeordnet sind, dass jeweils die Vorsprünge (61) des einen Teilabschnitts (15) in die Ausnehmungen (60) des anderen Teilabschnitts (15) eingreifen und die Durchgangsbohrungen (39) in den Vorsprüngen (61) und Ausnehmungen (60) miteinander fluchten.

5. Fördervorrichtung nach einem der vorangehenden Ansprüche, **dadurch gekennzeichnet, dass** der mindestens eine Schlitten (4) ein lösbares Zusatzelement (42) aufweist, das form- oder reibschlüssig mit den Teilabschnitten (15) des Grundträgers (14) verbunden ist und einer ungewünschten Vergrößerung einer Öffnungsweite (W) zwischen den Schenkeln (16, 17) entgegenwirkt.

6. Fördervorrichtung nach Anspruch 5, **dadurch gekennzeichnet, dass** das Zusatzelement (42) zwei Schenkel (48) aufweist, die die Teilabschnitte (15) des Grundträgers (14) formschlüssig zwischen sich aufnehmen.

7. Fördervorrichtung nach Anspruch 6, **dadurch gekennzeichnet, dass** das Zusatzelement (42) eine im Wesentlichen umgekehrte U-Form aufweist.

8. Fördervorrichtung nach Anspruch 5, **dadurch gekennzeichnet, dass** das Zusatzelement (42) ein Passstift (46) ist, der sich im Wesentlichen quer zur Längserstreckungsrichtung (L) der Führungsschiene (2) durch die Teilabschnitte (15) des Grundträgers (14) erstreckt.

9. Fördervorrichtung nach einem der vorangehenden Ansprüche, **dadurch gekennzeichnet, dass** die Teilabschnitte (15) Aussparungen (52) zur Aufnahme von Stiften (72) eines Öffnungswerkzeugs (70) aufweisen.

## Claims

1. Conveying device for conveying products, having
at least one individually movable slide (4) for receiving at least one product,
a guide rail (2), on which the at least one slide (4) is guided,
a linear-motor drive unit (6) for driving the at least one slide (4),
wherein the at least one slide (4) comprises a substantially horseshoe-shaped or U-shaped base carrier (14) having two legs (16, 17), which enclose the guide rail (2) on two opposite sides, wherein running rollers (18, 20, 22, 24, 26, 28) project inwards from the legs (16, 17),
wherein the at least one slide (4) comprises at least two permanent magnets (10), which are arranged on both sides next to the linear-motor drive unit (6) and are in operative connection with coils (8) of the linear-motor drive unit (6) in such a way that a force of attraction between the permanent magnets (10) and the linear-motor drive unit (6) has the effect of pretensioning the running rollers (18, 20, 22, 24, 26, 28) of the at least one slide (4) against the guide rail (2),
**characterized in that**
the base carrier (14) is divided into at least two interconnected subsections (15), each of which comprises one of the legs (16, 17), and
the subsections (15) are pivotably connected relative to each other about a pivot axis (23) running parallel to a direction of longitudinal extent (L) of the guide rail (2), wherein the pivot axis (23) is formed as an interlocking articulated connection,
wherein the at least two subsections (15) are pivotable in relation to one another between a closed working position, in which the base carrier (14) encloses the guide rail (2), and an open maintenance position, in which the base carrier (14) can be released from the guide rail (2).

2. Conveying device according to Claim 1, **characterized in that** the pivot axis (23) is arranged in the longitudinal centre plane (M) of the at least one slide (4).

3. Conveying device according to Claim 1 or 2, **characterized in that** the interlocking articulated connection is realized by a dowel pin (25), which engages in through-holes (39) passing through the subsections (15).

4. Conveying device according to Claim 3, **characterized in that** the subsections (15) respectively comprise recesses (60) and projections (61) in the area of the pivot axis (23), wherein the recesses (60) and projections (61) are arranged in such a way that in each case the projections (61) of one subsection (15) engage in the recesses (60) of the other subsection (15), and the through-holes (39) in the projections (61) and recesses (60) are in line with one another.

5. Conveying device according to one of the preceding claims, **characterized in that** the at least one slide (4) comprises a releasable additional element (42), which is connected with interlocking or frictional engagement to the subsections (15) of the base carrier (14) and counteracts an undesired increase in a gap width (W) between the legs (16, 17).

6. Conveying device according to Claim 5, **characterized in that** the additional element (42) comprises two legs (48), which receive the subsections (15) of the base carrier (14) between them with interlocking engagement.

7. Conveying device according to Claim 6, **characterized in that** the additional element (42) has a substantially inverted U shape.

8. Conveying device according to Claim 5, **characterized in that** the additional element (42) is a dowel pin (46), which extends substantially transversely to the direction of longitudinal extent (L) of the guide rail (2) through the subsections (15) of the base carrier (14).

9. Conveying device according to one of the preceding claims, **characterized in that** the subsections (15) comprise recesses (52) for receiving pins (72) of an opening tool (70).

## Revendications

1. Dispositif transporteur destiné à transporter des produits comprenant
au moins un chariot (4) mobile individuellement destiné à recevoir au moins un produit,
un rail de guidage (2), sur lequel le au moins un chariot (4) est guidé,
une unité d'entraînement à moteur linéaire (6) destinée à entraîner le au moins un chariot (4),
dans lequel le au moins un chariot (4) comprend un support de base (14) sensiblement en forme de fer à cheval ou en forme de U pourvu de deux branches (16, 17), qui entourent le rail de guidage (2) sur deux faces opposées, dans lequel des galets de roulement (18, 20, 22, 24, 26, 28) font saillie vers l'intérieur à partir des branches (16, 17),
dans lequel le au moins un chariot (4) comprend deux aimants permanents (10), qui sont agencés de façon bilatérale à côté de l'unité d'entraînement à moteur linéaire (6) et qui sont en liaison fonctionnelle avec des bobines (8) de l'unité d'entraînement à moteur linéaire (6), de telle manière qu'une force d'attraction entre les aimants permanents (10) et l'unité d'entraînement à moteur linéaire (6) provoque une précontrainte des galets de roulement (18, 20, 22, 24, 26, 28) du au moins un chariot (4) sur le rail de guidage (2),
**caractérisé en ce que**
le support de base (14) est divisé en au moins deux parties (15) reliées l'une à l'autre, parmi lesquelles chacune comporte une des branches (16, 17), et
les parties (15) sont reliées de manière à pouvoir pivoter l'une par rapport à l'autre autour d'un axe de pivotement (23) s'étendant parallèlement à une direction longitudinale (L) du rail de guidage (2), dans lequel l'axe de pivotement (23) est réalisé sous la forme d'une liaison articulée à coopération de formes,
dans lequel les au moins deux parties (15) peuvent pivoter l'une par rapport à l'autre entre une position de travail fermée, dans laquelle le support de base (14) entoure le rail de guidage (2), et une position d'attente ouverte, dans laquelle le support de base (14) peut être détaché du rail de guidage (2).

2. Dispositif transporteur selon la revendication 1, **caractérisé en ce que** l'axe de pivotement (23) est agencé dans le plan longitudinal médian (M) du au moins un chariot (4).

3. Dispositif transporteur selon la revendication 1 ou 2, **caractérisé en ce que** la liaison articulée à coopération de formes est réalisée par une goupille de serrage (25), qui s'insère dans des trous de passage (39) des parties (15).

4. Dispositif transporteur selon la revendication 3, **caractérisé en ce que** les parties (15) présentent chacune dans la zone de l'axe de pivotement (23) des évidements (60) et des parties saillantes (61), dans lequel les évidements (60) et les parties saillantes (61) sont agencés de telle manière que respectivement les parties saillantes (61) d'une des parties (15) s'insèrent dans les évidements (60) de l'autre partie (15) et que les trous de passage (39) dans les parties saillantes (61) et les évidements (60) sont en affleurement les uns avec les autres.

5. Dispositif transporteur selon l'une quelconque des revendications précédentes, **caractérisé en ce que** le au moins un chariot (4) présente un élément supplémentaire (42) amovible, qui est relié par coopération de formes ou par friction aux parties (15) du support de base (14) et qui agit à l'encontre d'un agrandissement non souhaité d'une largeur d'ouverture (W) entre les branches (16, 17).

6. Dispositif transporteur selon la revendication 5, **caractérisé en ce que** l'élément supplémentaire (42) comprend deux branches (48), qui reçoivent entre elles par coopération de formes les parties (15) du support de base (14).

7. Dispositif transporteur selon la revendication 6, **caractérisé en ce que** l'élément supplémentaire (42) présente une forme de U sensiblement inversée.

8. Dispositif transporteur selon la revendication 5, **caractérisé en ce que** l'élément supplémentaire (42) est un goujon de serrage (46), qui s'étend sensiblement transversalement à la direction longitudinale (L) du rail de guidage (2) à travers les parties (15) du support de base (14).

9. Dispositif transporteur selon l'une quelconque des revendications précédentes, **caractérisé en ce que** les parties (15) présentent des évidements (52) destinés à recevoir les broches (72) d'un outil d'ouverture (70).
